Europäisches Patentamt

European Patent Office

Office européen des brevets

(19)

(11) Numéro de publication : **0 488 898 A1**

(12) **DEMANDE DE BREVET EUROPEEN**

(21) Numéro de dépôt : 91403233.9

(22) Date de dépôt : 29.11.91

(51) Int. Cl.⁵ : **H01B 1/24, D06M 11/74, D06M 15/423, D06M 15/263, D06B 15/08, B29C 67/12**

(30) Priorité : 29.11.90 FR 9015239

(43) Date de publication de la demande :
03.06.92 Bulletin 92/23

(84) Etats contractants désignés :
AT BE CH DE ES FR GB IT LI NL SE

(71) Demandeur : Centre Technique Industriel dit:
INSTITUT TEXTILE DE FRANCE
280, avenue Aristide Briand B.P. 141
F-92223 Bagneux Cédex (FR)
(71) Demandeur : ETS. E. BOURGEOIS S.A.
Dommartin
F-80440 Boves (FR)

(72) Inventeur : Kaczmarek, Edmond
81/1 Rue Hoche
F-59115 Leers (FR)
Inventeur : Dubois, André
981 rue de la Vacquerie
Mocheau, F-59283 Raimbeaucourt (FR)
Inventeur : Le Guyader, Eric
12 rue Debray
F-80000 Amiens (FR)

(74) Mandataire : Descourtieux, Philippe et al
CABINET BEAU de LOMENIE 55 rue
d'Amsterdam
F-75008 Paris (FR)

(54) **Ruban enduit conducteur et procédé de fabrication.**

(57) Le ruban enduit conducteur a une résistance électrique spécifique superficielle d'au plus 3.000 ohms. cm/cm, il est souple et résistant au frottement. Il est constitué d'un ruban , tissé ou non-tissé, par exemple à base de fils ou fibres de verre, revêtu sur ses deux faces d'un produit d'enduction conducteur. Ce produit est un mélange d'une part d'une résine de type thermodurcissable , notamment mélamine-formol, seule ou en mélange avec une résine du type thermoplastique, notamment acrylique, en proportion d'au moins deux tiers, et d'autre part de graphite et de noir de carbone.

Le procédé consiste à imprégner le ruban sous tension avec le produit conducteur en dispersion aqueuse, à effectuer un raclage double face et un traitement thermique , de séchage et de réticulation, ces opérations étant de préférence réalisées en continu.

EP 0 488 898 A1

Jouve, 18, rue Saint-Denis, 75001 PARIS

La présente invention concerne un ruban enduit conducteur, c'est-à-dire un ruban dont le caractère conducteur d'électricité est obtenu par l'enduction dont il est revêtu. Elle concerne également le procédé de fabrication d'un tel ruban, qui a sa principale application dans le domaine du bobinage de moteur électrique.

Compte-tenu de l'application visée, le ruban enduit conducteur doit répondre à bon nombre de caractéristiques. Il doit bien sûr présenter une bonne conductivité électrique, qui est généralement définie par la valeur de sa résistance électrique superficielle ou de surface ; par exemple cette résistance spécifique superficielle sera au plus de 3.000 ohms. cm/cm et ne sera pas modifiée après application du vernis polyester époxy en milieu styrène après bobinage. Il doit être suffisamment souple pour supporter les conditions normales de bobinage. Par ailleurs le ruban enduit,avant finition, doit être résistant au frottement.

Selon les études faites par les demandeurs, aucun des rubans enduits conducteurs actuellement sur le marché ne donne une totale satisfaction au regard de ces trois critères : résistance électrique superficielle d'au plus 3.000 ohms.cm/cm, même après dépôt de vernis Polyester époxy en milieu styrène , souplesse et résistance au frottement.

Or on a trouvé et c'est ce qui fait l'objet de l'invention un ruban enduit conducteur qui pallie aux inconvénients précités en ce qu'il satisfait aux trois exigences ci-dessus.

Le ruban enduit conducteur est constitué d'un ruban, qui est imprégné d'un produit d' enduction conducteur.

Selon l'invention l'enduction conductrice est réalisée sur les deux faces du ruban à partir d'un mélange composé d'une part d'une résine qui est une résine du type thermodurcissable seule ou en mélange avec une résine du type thermoplastique dans une proportion d'au moins des deux tiers, et d'autre part de graphite et de noir de carbone en proportion telle que la résistance électrique superficielle du ruban est au plus de 3.000 ohms.cm/cm.

On sait que l'incorporation de l'élément carbone dans une résine peut rendre celle-ci conductrice dans certaines conditions. Ce carbone peut se présenter sous forme de graphite qui est un carbone naturel ou artificiel cristallisé ou sous forme de noir de carbone, dont les variétés sont multiples et qui est à l'état de fines particules.

Les essais menés par les demandeurs ont permis de constater qu'une enduction au graphite seul présentait une mauvaise résistance mécanique au frottement et une résistance électrique insuffisante, et qu'une enduction au noir de carbone seul présentait une résistance électrique superficielle ayant un très mauvais comportement vis-à-vis du traitement de finition à l'aide de vernis PES-époxy en milieu styrène,et que dans les deux cas le ruban pouvait être insuffisamment souple.

Dans le document EP 0 197 745, il est question de particules conductives dénommées sous l'appellation anglaise "carbon/graphite", mais sans qu'il y ait une distinction entre le noir de carbone d'une part et le graphite d'autre part et sans qu'il y soit prévu de réaliser un mélange de ces deux composants.

Dans le document GB 2 096 194, le matériau conducteur est une poudre de carbone ou de métal en dispersion aqueuse. Dans un exemple de réalisation, l'enduction conductrice comporte 50% de noir de carbone (sans présence de graphite), 25°% d'un caoutchouc styrène-butadiène -acrylonitrile et 25°% d'une résine mélamine-formaldéhyde. Comme cela ressortira dans la description qui sera faite ci-après la résistance électrique superficielle d'un tel ruban est largement supérieure à 3 000 ohms.cm/cm.

Ainsi c'est le mérite de l'invention que d'avoir proposé pour l'enduction conductrice une combinaison originale de composants connus par ailleurs; grâce à cette combinaison le ruban enduit conducteur selon l'invention satisfait aux exigences précitées.

De préférence la résine du type thermodurcissable est une résine mélamine-formol éthérifiée à plus de 50°%, avantageusement à environ 75°%. Dans ce mode de présentation, la résine réticule néanmoins sous forme d'un réseau, qui est peu accessible au solvant en particulier au styrène, mais qui est cependant plus souple que dans le cas d'une résine mélamine-formol pas ou peu éthérifiée.

De préférence le graphite est sous forme d'une dispersion aqueuse colloïdale, dont la taille des particules est à 90% inférieure au micromètre. Dans ce mode de présentation, le graphite présente un caractère lubrificateur qui améliore la souplesse du ruban.

De préférence le noir de carbone est du type Noir RCF, encore dénommé Noir de fourneau ou Noir Furnace.

Le ruban proprement dit est par exemple à base de fils ou fibres de verre ou bien à base d'un mélange fils ou fibres de verre et polyester. Le ruban peut être un ruban tissé ou un non-tissé.

L'enduction conductrice représente de 25 à 75°% en poids du ruban enduit.

C'est un autre objet de l'invention que de proposer un procédé de fabrication du ruban enduit conducteur précité. Ce procédé comporte les étapes successives suivantes :

a. imprégnation, plein bain et sous tension mécanique , du ruban dans un mélange composé d'une part d'une résine, qui est une résine du type thermodurcissable seule ou en mélange avec une résine du type thermoplastique dans les proportions d'au moins deux tiers, en émulsion aqueuse compatible et d'autre part de graphite et de noir de carbone en dispersion ;
b. raclage double face ;

c. traitements thermiques.

Selon la version préférée du procédé, les trois opérations d'imprégnation, raclage et traitements thermiques sont faites en continu et suivies d'une opération d'enroulement du ruban ainsi enduit; l'opération de dépôt du vernis est réalisée dans une étape ultérieure, après bobinage.

Les traitements thermiques comportent un pré-séchage par rayonnement infra-rouge, un séchage par rayonnement IR et /ou par convection air chaud suivi d'un traitement de réticulation.

Au moins au cours du pré-séchage et du séchage le ruban a une direction verticale ; dans ce cas le raclage double face est obtenu par passage du ruban imprégné sur deux racles disposées de part et d'autre de celui-ci de telle sorte que le ruban soit légèrement incliné d'un premier angle $\alpha$ par rapport à la verticale entre la sortie de l'imprégnation et la première racle, qu'il est incliné d'un second angle $\beta$ au plus égal à 45° par rapport à la verticale entre les deux racles et que chaque racle est sensiblement perpendiculaire à la direction que fait le ruban en amont de la ligne de raclage correspondant à ladite racle.

Cette disposition particulière permet d'obtenir une enduction parfaitement régulière sur les deux faces du ruban ; notamment elle évite les irrégularités dues aux coulées de produit d'enduction d'une face sur l'autre.

De préférence l'angle $\alpha$ est compris entre 5 et 15° ; l'angle $\beta$ est compris entre 20 et 45°.

On conçoit que les valeurs des angles $\alpha$ et $\beta$ seront déterminées en fonction de la viscosité du bain d'imprégnation et du taux d'emport souhaité, de la nature du ruban, de la vitesse de défilement du ruban , etc.

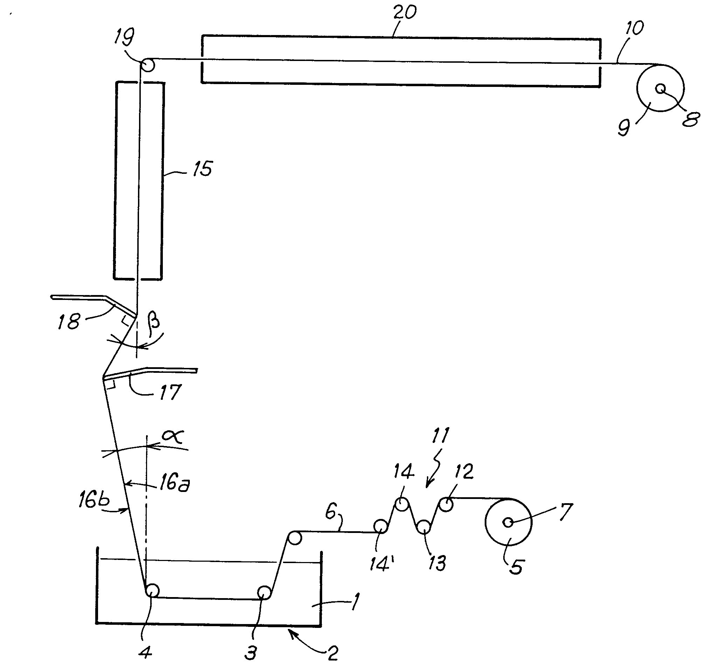

D'autres caractéristiques et avantages de la présente invention apparaîtront plus clairement à la lecture de la description qui va être faite de deux exemples de réalisation de ruban enduit conducteur et de leur procédé de fabrication, illustré par le dessin annexé dans lequel la figure unique est une vue schématique de côté de l'installation d'enduction et de traitement thermique.

Le ruban enduit conducteur dont on va décrire la fabrication est destiné principalement au bobinage des moteurs électriques.

Le ruban de départ est un ruban tissé d'environ 100g/m² obtenu à partir de fils de verre ou éventuellement de fils en mélange verre/polyester.

Dans un premier exemple de réalisation, le bain d'enduction est constitué d'un mélange aqueux d'au moins cinq ingrédients : une résine type mélamine-formol, son catalyseur, une résine acrylique, du graphite en dispersion aqueuse et du noir de carbone en dispersion aqueuse. Le bain est préparé par mélange direct dans l'eau de ces cinq composants à l'aide d'un disperseur, éventuellement en présence d'autres produits tels épaississants, adoucissants, lubrifiants, plastifiants.

Les proportions sont les suivantes :
200g d'une solution commerciale de résine mélamine-formol, éthérifiée à environ 75%
24 g d'une solution de catalyseur,
50 g d'une dispersion commerciale de résine acrylique,
150g d'une dispersion commerciale de graphite, dont la granulométrie est supérieure au micromètre
250g de noir de carbone dispersé dénommé Noir pigmentaire 7.

On ajoute une quantité suffisante d'eau pour obtenir que le bain d'enduction ainsi préparé ait une viscosité d'au plus 50 cPo, ladite viscosité étant mesurée au viscosimètre rotatif HAAKE VT 02 mobile 3.

Le bain d'enduction 1 est placé dans le bac 2 d'imprégnation de telle sorte qu'il recouvre constamment les barreaux de détour 3,4.

La bobine 5 d'alimentation du ruban 6 à enduire est montée sur un axe rotatif 7 éventuellement entraîné en rotation de manière synchronisée avec l'axe de rotation 8 de la bobine 9 de réception du ruban 10 enduit.

La tension mécanique du ruban 6 alimenté à partir de la bobine 5 est contrôlée par le dispositif 11 qui est constitué d'un embarrage à quatre barres cylindriques 12,13,14, 14' autour desquels passe le ruban 6. Deux des barres 12,14 sont déplaçables en hauteur par translation ou rotation par rapport aux deux autres barres 13,14' qui sont fixes en position : la position des barres mobiles 12,14 est asservie à un système de contrôle et de régulation de la force développée par le passage du ruban 6. La tension peut être de quelques centaines de grammes pour un ruban de deux centimètres de largeur.

Après le passage dans le bain 1 d'imprégnation, le ruban est dirigé vers un premier four vertical de pré-séchage 15 immédiatement suivi d'un four de séchage 15'. Entre le barreau de sortie 4 du bac d'imprégnation 2 et l'entrée du four de pré-séchage 15, le ruban imprégné est raclé sur ses deux faces par les deux racles 17,18 tout en suivant un parcours au long duquel il occupe trois directions différentes.

Dans une première zone s'étendant entre le barreau 4 et la première racle 17, le ruban 16 est légèrement incliné et forme un angle $\alpha$ d'environ 10° par rapport à un plan vertical.

Dans une deuxième zone s'étendant entre la première racle 17 et la seconde racle 18, le ruban 16 est incliné et forme un angle $\beta$ d'environ 30° par rapport à un plan vertical.

Dans une troisième zone s'étendant entre la seconde racle 18 et le rouleau de détour 19, et passant à travers le four de séchage 15, le ruban 16 a une direction sensiblement verticale.

Les deux racles sont des lames métalliques d'environ 1 à 1,5mm d'épaisseur ; l'extrémité en contact avec le ruban est légèrement arrondie et correspond à la ligne de raclage.

Comme cela apparaît sur la figure, chaque racle 17,18 est sensiblement perpendiculaire à la direction prise par le ruban 16 en amont de la ligne de raclage correspondant à ladite lame.

Cette disposition particulière des racles 17,18 par rapport au ruban 16 imprégné permet d'obtenir une répartition régulière dans le temps de l'enduction.

Une certaine quantité de bain est emportée par le ruban 16 du fait de la mouillabilité naturelle du ruban 6,de la vitesse de défilement, de la nature du bain et de sa viscosité. Le passage sur la première racle 17 élimine l'excès de bain se trouvant sur la face 16a du ruban 16 au regard de la ligne de raclage correspondante. Cet excès peut librement s'écouler vers le bac 1 le long de cette face 16a.

Le passage sur la seconde racle 18 élimine l'excès de bain se trouvant sur la face 16b du ruban 16 au regard de la ligne de raclage correspondante. Cet excès va s'écouler le long de la face 16b, et sans goutter sur l'autre face 16a du ruban ni sur l'autre racle 17. Ce résultat est obtenu grâce aux valeurs des angles, et à l'écartement entre les deux racles 17, 18, qui est dans le cas présent de l'ordre de 5cm.

La quantité de bain emportée par le ruban 16 après passage sur les racles 17,18 est fonction de la nature du ruban, de la tension mécanique exercée sur le ruban, de la concentration du bain et de sa viscosité.

Les fours de pré-séchage 15 et de séchage 15' comportent des émetteurs à rayonnement infra-rouge respectivement moyens et longs.Leur puissance calorifique est réglée en intervenant sur l'alimentation électrique des émetteurs de telle sorte que l'enduction soit suffisamment sèche à la sortie du four 15 pour que le ruban puisse passer sans formation de défaut sur le rouleau de détour 19.

Le four de séchage 15' peut aussi être un four à convection par air chaud.

Le ruban passe ensuite, selon une direction horizontale, dans le four de réticulation 20, qui est un four à convection à plusieurs étages dont la température de chacun est régulée par un système capteur régulateur non représenté sur la figure de façon à obtenir un degré de réticulation tel que la résistance électrique superficielle soit inférieure à 3.000ohms. cm/cm.

Cette mesure de résistance électrique superficielle est réalisée entre deux électrodes faisant chacune 2 cm de largeur et distantes l'une de l'autre de 10 cm, le ruban est appliqué sur les deux électrodes par une plaque isolante de 200 g. Pour un ruban de deux centimètres de largeur, la résistance lue sur l'ohmètre était en moyenne de 6000 ohms; la résistance électrique superficielle est égale à :

résistance lue sur l'ohmètre X largeur du ruban (cm)

distance entre les électrodes (cm)

soit 1.200 ohms.cm/cm.

Des mesures comparatives ont été réalisées dans les conditions décrites dans le document GB 2 096 194, c'est à dire avec des électrodes de 2,54 cm de largeur, distantes de 2,54 cm, le ruban étant appliqué avec une plaque de 3,6 kg. Avec le ruban précité, la résistance lue sur l'ohmètre est de 1600 ohms, à comparer aux 5000 ohms de l'exemple cité dans ce document.

Dans ce premier exemple de réalisation, la régulation du four 20 était basée sur une température de 145°C pour un taux d'emport final de l'ordre de 60%, ce taux étant mesuré par rapport au poids du ruban avant enduction.

La température du four de réticulation 2 est une caractéristique importante dans la mesure où , si elle est trop élevée et que la réticulation des résines est excessive,le ruban est cassant et où , si elle est trop basse et que la réticulation est insuffisante,le ruban n'est pas assez conducteur.

On comprend qu'il revient à l' homme du métier par simple expérimentation de déterminer les conditions de régulation optimales en fonction du mélange de résines, de graphite et de noir de carbone constituant le produit d'enduction.

Le ruban 10 obtenu a été testé quant à son comportement après dépôt du vernis Polyester époxy en milieu styrène de finition: sa résistance électrique spécifique superficielle restait comprise entre 1000 et 1500 ohms.cm/cm, sa souplesse était suffisante pour le bobinage et il n'a pas été remarqué de salissure lors des diverses manipulations.

Dans un second exemple de réalisation, on a mis en oeuvre une seule résine thermodurcissable et du graphite sous forme d'une dispersion colloïdale.

Les proportions sont les suivantes :
200 g d'une solution commerciale de résine mélamine-formol, éthérifiée à environ 75%,
24 g d'une solution de catalyseur,
150 g d'une dispersion colloïdale de graphite, dont la granulométrie est à 90°% inférieure au micromètre,
250 g de noir de carbone du type RCF dispersé avec un agent mouillant,
et la quantité d'eau suffisante pour obtenir une viscosité d'au plus 50 cPo mesurée dans les conditions du premier exemple.

Les autres conditions étant identiques, la régulation du four 20 de réticulation était basée sur une température comprise entre 120° et 130° pour un taux d'emport final compris entre 50 et 60%.

Le temps de réticulation est de l'ordre de la minute.

La résistance électrique superficielle mesurée sur le ruban de ce second exemple est inférieure à 1000 ohms.cm/cm.

## Revendications

1. Ruban enduit conducteur constitué d'un ruban revêtu d'un produit d'enduction conducteur dont l'enduction conductrice est réalisée sur les deux faces du ruban à partir d'un mélange composé d'une part d'une résine qui est une résine du type thermodurcissable seule ou en mélange avec une résine du type thermoplastique dans une proportion d'au moins des deux tiers et d'autre part de graphite et de noir de carbone en proportion telle que la résistance spécifique superficielle du ruban est au plus de 3.000 ohms.cm/cm.

2. Ruban selon la revendication 1 caractérisé en ce que la résine thermodurcissable est une résine mélamine-formol éthérifiée à plus de 50%.

3. Ruban selon l'une des revendications 1 ou 2 caractérisé en ce que le graphite est sous forme d'une dispersion aqueuse colloïdale, dont la taille des particules est à 90°% inférieure au micromètre.

4. Ruban selon l'une des revendications 1 ou 2 caractérisé en ce que le noir de carbone est du type Noir RCF encore dénommé Noir de fourneau ou Noir Furnace.

5. Ruban selon la revendication 1 caractérisé en ce que l'enduction conductrice représente de 25 à 75°% en poids du ruban enduit.

6. Ruban selon l'une des revendications 1 à 5 caractérisé en ce que le ruban est un ruban tissé ou non-tissé , en fils ou fibres de verre seuls ou en mélange avec du polyester.

7. Procédé de fabrication du ruban enduit conducteur selon la revendication 1 caractérisé en ce qu'il comporte les étapes successives suivantes :
   a. imprégnation plein bain et sous tension mécanique du ruban dans un mélange composé d'une part d'une résine, qui est une résine du type thermodurcissable seule ou en mélange avec une résine du type thermoplastique dans les proportions d'au moins deux tiers, en émulsion aqueuse compatible, et d'autre part de graphite et de noir de carbone en dispersion aqueuse ;
   b. raclage double face ;
   c. traitements thermiques.

8. Procédé selon la revendication 7 caractérisé en ce que les trois opérations d'imprégnation, raclage et traitements thermiques sont faites en continu et suivies d'une opération d'enroulement du ruban ainsi enduit.

9. Procédé selon la revendication 8 caractérisé en ce que le traitement thermique comporte un pré-séchage, un séchage par rayonnement infra-rouge suivi d'un traitement de réticulation proprement dit.

10. Procédé selon l'une des revendications 7 ou 8 caractérisé en ce que , au moins au cours du séchage le ruban ayant une direction verticale, le raclage double face est obtenu par passage du ruban imprégné (16) sur deux racles (17,18) disposées de part et d'autre de celui-ci de telle sorte que le ruban est légèrement incliné d' un premier angle ($\alpha$) par rapport à la verticale entre la sortie de l'imprégnation et la première racle (17), qu'il est incliné d'un second angle ($\beta$) au plus égal à 45° par rapport à la verticale entre les deux racles (17,18) et que chaque racle est sensiblement perpendiculaire à la direction que fait le ruban en amont de la ligne de raclage correspondant à ladite racle.

11. Procédé selon la revendication 10 caractérisé en ce que l'angle $\alpha$ est compris entre 5°et 15° et l'angle $\beta$ est compris entre 20 et 45°.

12. Procédé selon la revendication 9 caractérisé en ce que le traitement de réticulation est régulé en sorte d'obtenir un ruban souple ayant une résistance spécifique superficielle d'au plus 3.000ohms.cm/cm.

13. Procédé selon la revendication 12 caractérisé en ce que pour un produit conducteur d'enduction à base de mélamine-formol et de résine acrylique et un taux d'emport final de l'ordre de 60%, le traitement de réticulation a lieu à une température de l'ordre de 145°C.

14. Procédé selon la revendication 12 caractérisé en ce que pour un produit conducteur d'enduction à base de mélamine-formol éthérifié à plus de 50%, et de graphite en dispersion colloïdale, et un taux d'emport final de l'ordre de 50 à 60%, le traitement de réticulation a lieu à une température de l'ordre de 120 à 130°C.

EP 0 488 898 A1

**Office européen des brevets**

# RAPPORT DE RECHERCHE EUROPEENNE

Numero de la demande

EP 91 40 3233
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 197 745 (C. ROMANIEC)<br>* page 1, ligne 1 - ligne 15 *<br>* page 2, ligne 13 - ligne 18 *<br>* page 3, ligne 2 - ligne 16 *<br>* page 8, ligne 19 - page 9, ligne 13;<br>revendications 1-5,9; figure 1 *<br>--- | 1-8 | H01B1/24<br>D06M11/74<br>D06M15/423<br>D06M15/263<br>D06B15/08<br>B29C67/12 |
| D,A | GB-A-2 096 194 (LANTOR LTD)<br>* page 1, ligne 107 - ligne 125 *<br>* page 2, ligne 45 - ligne 68; revendications<br>1-6,8,11-17 *<br>--- | 1-8 | |
| A | GB-A-2 191 668 (K.C.C. ROMANIEC)<br>* revendications 1-4,6 *<br>--- | 1,2 | |
| A | US-A-4 547 311 (J. SAKO ET AL)<br>* colonne 1, ligne 54 - colonne 2, ligne 2 *<br>* colonne 4, ligne 9 - ligne 15; revendications<br>1-3,7 *<br>--- | 1,2,4,5 | |
| A | US-A-4 002 785 (M. GROSSMANN ET AL)<br>* colonne 7, ligne 15 - ligne 22 *<br>* colonne 7, ligne 61 - ligne 66 *<br>* colonne 3, ligne 17 - ligne 26 *<br>* colonne 9, ligne 1 - ligne 27; revendications<br>1,3,13 *<br>--- | 1-8 | **DOMAINES TECHNIQUES RECHERCHES (Int. Cl.5)**<br><br>B29C<br>D06M<br>D06N<br>D06B<br>H01B |
| A | WORLD PATENTS INDEX<br>Week 7736,<br>Derwent Publications Ltd., London, GB;<br>AN 77-63564Y<br>& JP-A-52 087 694 (NIPPON KOKUEN KOGYO) 17<br>Janvier 1976<br>* abrégé *<br>--- | 1,3,4,6,7 | |
| A | DE-A-2 031 130 (VEREINIGTE SCHMIRGEL- UND<br>MASCHINEN-FABRIKEN A.G.)<br>* page 3, ligne 13 - page 4, ligne 12 *<br>* page 5, ligne 20 - ligne 23; revendication 1 *<br>--- | 1 | |

Le présent rapport a été établi pour toutes les revendications

| Lieu de la recherche | Date d'achèvement de la recherche | Examinateur |
|---|---|---|
| LA HAYE | 25 MARS 1992 | VAN NIEUWENHUIZE O. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

7

Office européen
des brevets

# RAPPORT DE RECHERCHE EUROPEENNE

Numero de la demande

EP    91 40 3233
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 809 573 (R.D. FEITLOWITZ ET AL)<br>* colonne 1, ligne 50 - ligne 73 *<br>* colonne 2, ligne 49 - ligne 56; revendications 1,2 *<br><br>--- | 1,2 | |
| A | EP-A-0 186 644 (E. FRANCES IZQUIERDO)<br>* revendications 1-4 *<br><br>--- | 1 | |
| A | EP-A-0 037 605 (STORK BRABANT B.V.)<br>* revendications 1,3,4; figure 2 *<br><br>--- | 7,8,10 | |
| A | DE-A-2 652 108 (C. KOLCKMANN)<br>* page 6, ligne 4 - ligne 11; revendication 1; figures 1-3 *<br><br>----- | 7,8,10 | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 25 MARS 1992 | VAN NIEUWENHUIZE O. |